(19) Europäisches
Patentamt

European
Patent Office

Office européen
des brevets

(11) **EP 4 116 928 A1**

(12) **EUROPEAN PATENT APPLICATION**
published in accordance with Art. 153(4) EPC

(43) Date of publication:
**11.01.2023 Bulletin 2023/02**

(21) Application number: **20923319.6**

(22) Date of filing: **03.03.2020**

(51) International Patent Classification (IPC):
*G06T 7/00* *(2017.01)*

(52) Cooperative Patent Classification (CPC):
**G06T 7/00**

(86) International application number:
**PCT/JP2020/008809**

(87) International publication number:
**WO 2021/176544 (10.09.2021 Gazette 2021/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **FUJITSU LIMITED**
**Kawasaki-shi, Kanagawa 211-8588 (JP)**

(72) Inventor: **UCHIDA, Hidetsugu**
**Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

(54) **CONTROL METHOD, CONTROL PROGRAM, AND INFORMATION PROCESSING DEVICE**

(57)     To improve authentication accuracy. A processing unit (12) receives a plurality of pieces of captured data of a person, and generates weight information indicating a weight applied to each of the plurality of pieces of captured data on the basis of quality of each of the plurality of pieces of captured data and the number of the plurality of pieces of captured data. When representative data representing the plurality of pieces of captured data is calculated from the plurality of pieces of captured data, the processing unit (12) applies an algorithm in which the smaller the weight indicated by the generated weight information, the smaller an influence of each of the plurality of pieces of captured data on a calculation result of the representative data.

FIG. 1

EP 4 116 928 A1

**Description**

FIELD

The present invention relates to a control method, a control program, and an information processing apparatus.

BACKGROUND

Currently, biometric information may be used to authenticate a person. The biometric information is information indicating physical features or behavioral features of a human. Examples of the physical features include fingerprints, veins, iris, and face. Examples of the behavioral features include handwriting.

For example, there is a proposal of a system that recognizes an object by a machine learning model. In the proposed system, the machine learning model is configured to determine a distance from one or more examples of an object, which is observed during online training, to a predetermined decision boundary established during off-line training for a classifier, and update a decision rule as a function of the distance. Furthermore, the machine learning model is configured to classify a future example on the basis of the updated decision rule.

CITATION LIST

PATENT DOCUMENT

Patent Document 1: International Publication Pamphlet No. WO 2016/144523

SUMMARY

[TECHNICAL PROBLEM]

By an information processing apparatus, from a plurality of pieces of captured data acquired by a sensor or the like for a certain person, representative data corresponding to the person may be created, and the person may be authenticated on the basis of the representative data. However, noise in accordance with sensing conditions by the sensor may be mixed in each piece of the captured data. Thus, due to an influence of the noise mixed in each piece of the captured data, features of the person may not be properly reflected in the representative data. When the features of the person are not properly reflected in the representative data, authentication accuracy of the person based on the representative data deteriorates.

In one aspect, an object of the present invention is to provide a control method, a control program, and an information processing apparatus capable of improving authentication accuracy.

[SOLUTION TO PROBLEM]

In one mode, a control method is provided. In this control method, a computer receives a plurality of pieces of captured data of a person, generates, on the basis of quality of each of the plurality of pieces of captured data and the number of the plurality of pieces of captured data, weight information that indicates a weight applied to each of the plurality of pieces of captured data, and applies, when representative data that represents the plurality of pieces of captured data is calculated from the plurality of pieces of captured data, an algorithm in which the smaller the weight indicated by the generated weight information, the smaller an influence of each of the plurality of pieces of captured data on a calculation result of the representative data.

Furthermore, in one mode, a control program is provided.

Furthermore, in one mode, an information processing apparatus is provided.

According to an aspect of the embodiments, a control method for causing a computer to execute processing includes receiving a plurality of pieces of captured data of a person; generating, on the basis of quality of each of the plurality of pieces of captured data and the number of the plurality of pieces of captured data, weight information that indicates a weight applied to each of the plurality of pieces of captured data; and applying, when representative data that represents the plurality of pieces of captured data is calculated from the plurality of pieces of captured data, an algorithm in which the smaller the weight indicated by the generated weight information, the smaller an influence of each of the plurality of pieces of captured data on a calculation result of the representative data.

[ADVANTAGEOUS EFFECTS OF INVENTION]

In one aspect, authentication accuracy may be improved.
The object described above and other objects, features, and advantages of the present invention will become apparent from the following description in conjunction with the accompanying drawings, which illustrate preferred embodiments as examples of the present invention.

BRIEF DESCRIPTION OF DRAWINGS

FIG. 1 is a diagram illustrating a processing example of an information processing apparatus according to a first embodiment;
FIG. 2 is a diagram illustrating an example of an information processing system according to a second embodiment;
FIG. 3 is a diagram illustrating an example of hardware of a server;
FIG. 4 is a diagram illustrating an example of functions of the server;
FIG. 5 is a diagram illustrating an example of a training data table;
FIG. 6 is a diagram illustrating an example of a person representative data table;
FIG. 7 is a diagram illustrating an example of a cluster representative data table;
FIG. 8 is a flowchart illustrating an example of generation of a person representative vector;
FIG. 9 is a flowchart illustrating an example of generation of a cluster representative vector;
FIG. 10 is a flowchart illustrating an example of authentication; and
FIG. 11 is a flowchart illustrating an example of generation of a person representative vector according to a third embodiment.

DESCRIPTION OF EMBODIMENTS

Hereinafter, the present embodiments will be described with reference to the drawings.

[First Embodiment]

A first embodiment will be described.

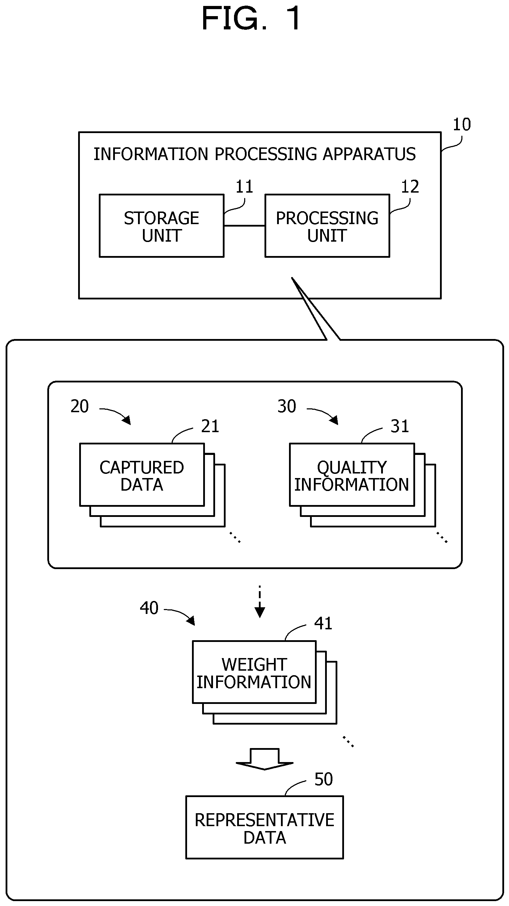

FIG. 1 is a diagram illustrating a processing example of an information processing apparatus according to the first embodiment.
An information processing apparatus 10 generates representative data for each person used for authentication of the person. The representative data is generated on the basis of captured data obtained by capturing images of biological features of the person. The biological features include physical features or behavioral features of the person. Examples of the physical features include fingerprints, veins, iris, and face. Examples of the behavioral features include handwriting. The representative data is generated on the basis of a plurality of pieces of captured data acquired for a person at the time of registration of the person. The captured data is, for example, an image acquired by a sensor such as a camera that performs capturing by using infrared light, visible light, or the like.
The information processing apparatus 10 includes a storage unit 11 and a processing unit 12.
The storage unit 11 may be a volatile storage device such as a random access memory (RAM) or may be a non-volatile storage device such as a hard disk drive (HDD) or a flash memory. The processing unit 12 may include a central processing unit (CPU), a digital signal processor (DSP), an application specific integrated circuit (ASIC), and a field programmable gate array (FPGA). The processing unit 12 may be a processor that executes a program. The "processor" here may also include a set of a plurality of processors (multiprocessor).
The storage unit 11 stores information used for processing by the processing unit 12. The storage unit 11 stores a plurality of pieces of captured data of a person captured in advance by the sensor, and a plurality of pieces of quality information corresponding to the plurality of pieces of captured data. The quality information includes an index value indicating quality of each piece of captured data.
Here, quality of captured data differs in accordance with sensing conditions of the captured data. For example, in the case of a face image, blur at the time of capturing, a degree of illumination, an inclination of a face with respect to a capturing direction in which a lens of a camera or the like is directed (for example, facing sideways), and the like are conceivable as elements that affect the quality of the captured data. Therefore, when a face image is targeted, an index value indicating quality may be, for example, magnitude of an inclination of a face with respect to a capturing direction, which is estimated from coordinate data of facial feature points (eyes, nose, mouth, and the like) or magnitude of illumination variation between coordinates and magnitude of blur. The larger the index value indicating the quality, in other words, the better the quality, the smaller an influence of noise on the captured data. The smaller the index value indicating the quality, in other words, the worse the quality, the smaller the influence of the noise on the captured data.

The quality information is acquired in association with each piece of captured data and stored in advance in the storage unit 11. The quality information may be generated for each piece of captured data by the processing unit 12 and stored in the storage unit 11. Furthermore, the storage unit 11 stores weight information for each piece of captured data and representative data of a person, which are generated by the processing unit 12.

The processing unit 12 receives a plurality of pieces of captured data of a person, and generates weight information indicating a weight applied to each of the plurality of pieces of captured data on the basis of quality of each of the plurality of pieces of captured data and the number of the plurality of pieces of captured data.

When calculating representative data representing the plurality of pieces of captured data from the plurality of pieces of captured data, the processing unit 12 applies an algorithm in which the smaller the weight indicated by the generated weight information, the smaller an influence of each of the plurality of pieces of captured data on a calculation result of the representative data.

Here, it is assumed that a captured data group 20 and a quality information group 30 corresponding to the captured data group 20 are stored for a certain person in the storage unit 11. For example, captured data 21 is captured data included in the captured data group 20. For example, quality information 31 is an index value indicating quality corresponding to the captured data 21, which is included in the quality information group 30.

The processing unit 12 generates a weight information group 40 for the captured data group 20. For example, weight information 41 is information indicating a weight corresponding to the captured data 21. The processing unit 12 generates the weight information group 40 as follows.

In a first example, the processing unit 12 compares the number of a plurality of pieces of captured data of a certain person with a threshold, and selects a weight calculation method for each person in accordance with the comparison. In a case where the number of the plurality of pieces of captured data of the certain person is equal to or greater than the threshold, the processing unit 12 makes the respective weights of the plurality of pieces of captured data of the person equal. This is because, when representative data is generated, the larger the number of samples, the less an influence of noise.

On the other hand, in a case where the number of the plurality of pieces of captured data of the certain person is smaller than the threshold, the processing unit 12 increases a weight of the captured data as quality of the captured data is better. Furthermore, the processing unit 12 reduces the weight of the captured data as the quality of the captured data is worse. This is because, since the better the quality, the smaller the influence of the noise, it is highly possible that features of the relevant person are properly reflected in the captured data.

At this time, the processing unit 12 may determine magnitude of the influence of the quality on the weight in accordance with a ratio R1 to the threshold of the number of the plurality of pieces of captured data. For example, it is conceivable that the processing unit 12 decreases the influence of the quality on the weight as the ratio R1 increases, and increases the influence of the quality on the weight as the ratio R1 decreases. This is because the smaller the ratio R1, the more easily representative data of the relevant person is affected by the noise.

Alternatively, the processing unit 12 may determine the magnitude of the influence of the quality on the weight in accordance with a ratio R2 of the number of pieces of captured data having quality worse than predetermined quality among the plurality of pieces of captured data to the number of the plurality of pieces of captured data. For example, it is also conceivable that the processing unit 12 decreases the influence of the quality on the weight as the ratio R2 decreases, and increases the influence of the quality on the weight as the ratio R2 increases. This is because the larger the ratio R2, the more easily the representative data of the relevant person is affected by the noise.

In the case of the first example, for example, the processing unit 12 uses a vector obtained by weighting and averaging feature vectors indicating features of each piece of captured data of the relevant person by the weight of the captured data as representative data 50 of the person. Then, the smaller the weight indicated by the weight information, the smaller the influence of the captured data on the calculation result of the representative data 50.

In a second example, the processing unit 12 estimates a noise component included in a feature by using a regression model of a feature of the captured data and an index value indicating quality. Here, the feature is one element of a feature vector of the captured data. Furthermore, the quality in this case is represented by a vector having a plurality of index values. The regression model may be, for example, generated on the basis of a plurality of pieces of captured data obtained for a plurality of persons, or generated on the basis of a plurality of pieces of captured data of a relevant person. In the generation of the regression model, the number of the plurality of pieces of captured data of the relevant person is used.

By subtracting the estimated noise component from the feature, the processing unit 12 calculates a weight or weighted feature corresponding to the captured data, for each element of the feature vector of the captured data. In other words, in the second example, the weight or weighted feature corresponding to the captured data is obtained as a vector (referred to as a weight vector or a weighted feature vector). In this case, the processing unit 12 uses, for example, a vector obtained by averaging weighted feature vectors obtained for each piece of captured data of the relevant person as the representative data 50 of the person. Then, among the weighted feature vectors, an element having a larger value is a component having a larger weight, in other words, having a smaller influence of noise, and an influence on an element of the representative data 50 corresponding to the element becomes larger. Furthermore, among the weighted feature vectors, an element having a smaller value is a component having a smaller weight, in other words, having a larger influence of noise, and an influence on an element of the representative data 50 corresponding to the element becomes smaller.

According to the information processing apparatus 10, a plurality of pieces of captured data of a person is received. On the basis of quality of each of the plurality of pieces of captured data and the number of the plurality of pieces of captured data, weight information indicating a weight applied to each of the plurality of pieces of captured data is generated. When representative data representing the plurality of pieces of captured data is calculated from the plurality of pieces of captured data, an algorithm is applied in which the smaller the weight indicated by the generated weight information, the smaller an influence of each of the plurality of pieces of captured data on a calculation result of the representative data.

With this configuration, authentication accuracy may be improved.

Here, noise in accordance with sensing conditions by the sensor may be mixed in each piece of the captured data used for generation of the representative data. Thus, due to an influence of the noise mixed in each piece of the captured data, features of the person may not be properly reflected in the representative data. When the features of the person are not properly reflected in the representative data, authentication accuracy of the person based on the representative data deteriorates. It is also conceivable to exclude captured data having a relatively large influence of noise from samples for training of the representative data. However, since the number of samples affects accuracy of the representative data, it is preferable to maintain the number of samples as much as possible.

Thus, the information processing apparatus 10 obtains a weight for each piece of captured data on the basis of quality of each piece of captured data and the number of a plurality of pieces of captured data, and adjusts an influence of each piece of captured data on the representative data in accordance with the weight. In other words, for a feature vector or a feature of captured data, which is estimated to have a less influence of noise, the information processing apparatus 10 calculates representative data so that the representative data approaches the feature vector or the feature. With this configuration, representative data utilizing an amount of data may be generated while reducing an influence of noise. As a result, biological features of a person may be properly reflected in the representative data, and authentication accuracy of the person based on the representative data may be improved.

For example, when authenticating a certain person, the information processing apparatus 10 may properly authenticate the person by collating a feature vector of captured data acquired for the person with representative data of each person stored in the storage unit 11.

Furthermore, the information processing apparatus 10 may classify each piece of representative data into a plurality of clusters by a clustering method such as K-means clustering on the basis of a plurality of pieces of representative data of a plurality of persons, and obtain cluster representative data of each cluster. In this case, when authenticating a certain person, by collating a feature vector of captured data acquired for the person with the cluster representative data, the information processing apparatus 10 may narrow down representative data of the person to be collated with the feature vector. In this way, even in a case where each piece of representative data is classified by clustering, since biological features of each person are properly reflected in the representative data, highly accurate clustering may be performed. Furthermore, accuracy of narrowing down the representative data to be collated may be improved by the cluster. As a result, authentication accuracy of the person may be improved.

[Second Embodiment]

Next, a second embodiment will be described.

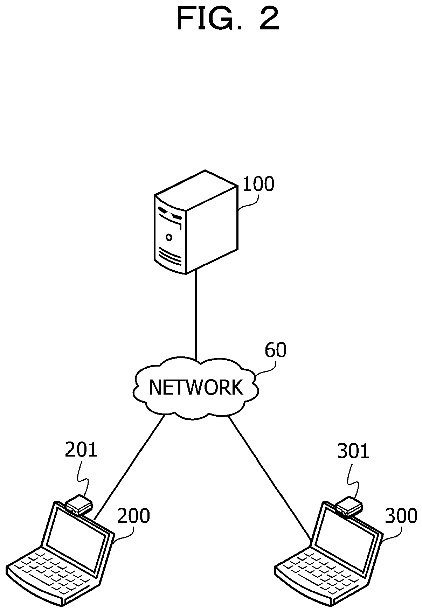

FIG. 2 is a diagram illustrating an example of an information processing system according to the second embodiment.

The information processing system according to the second embodiment includes a server 100 and clients 200 and 300. The server 100 and the clients 200 and 300 are connected via a network 60. The network 60 may be, for example, a local area network (LAN), the internet, or a wide area network (WAN).

The server 100 is a server computer that provides functions of performing biometric authentication of a person who uses the information processing system, in other words, a user. The server 100 performs face authentication based on captured data of a face of the user, in other words, a face image. Note that the captured data used for the authentication is not limited to the face image, but may be another type of image representing biological features of the user. For example, the captured data may be an image of fingerprints, veins, iris, or another part or organ of a body, or an image of handwriting or the like. The captured data of the face or the like of the user used for the authentication may be referred to as biometric data because the captured data represents the biological features of the user. The server 100 is an example of the information processing apparatus 10 according to the first embodiment.

The clients 200 and 300 are client computers used by users. The clients 200 and 300 include cameras 201 and 301, respectively. The cameras 201 and 301 incorporate image sensors such as charged-coupled devices (CCD) or complementary metal-oxide-semiconductors (CMOSs), and captures images of faces of users who operate the clients 200 and 300, respectively, to generate captured data. When a predetermined function in the clients 200 and 300 is used, the clients 200 and 300 request the server 100 to perform face authentication based on the captured data captured by the cameras 201 and 301, respectively, and permit use of the function only to users who have succeeded in the authentication.

As the function in the clients 200 and 300 that needs user authentication for use, for example, login to operating systems (OSs) or other applications in the clients 200 and 300 is conceivable. Alternatively, functions such as login to various services provided by a Web server, an application server (not illustrated), or the like that communicates with the clients 200 and 300, and settlement provided by the Web server or the like are also conceivable.

Note that the clients 200 and 300 may be smart devices such as smartphones and tablet terminals. Furthermore, the clients 200 and 300 are not limited to general-purpose computers, but may be, for example, computers for a specific application with personal authentication for providing functions, such as automated teller machines (ATMs), point of sale (POS) terminals, vending machines, electronic locks for controlling door locks, and entrance and exit management devices.

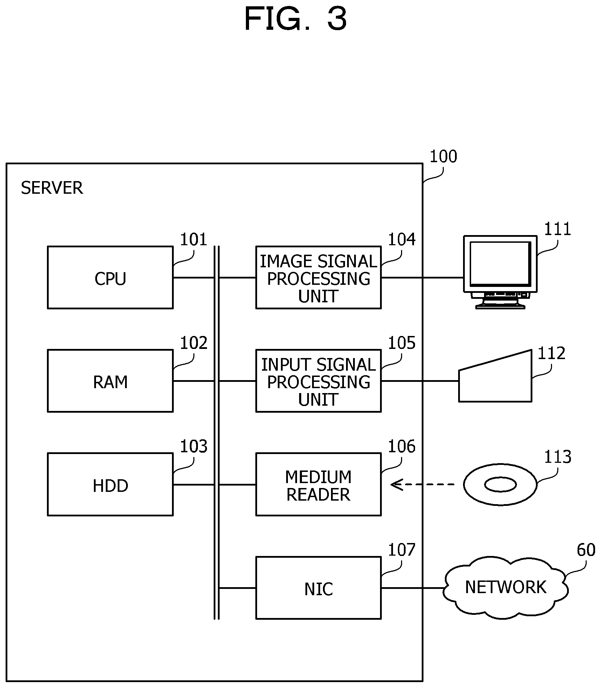

FIG. 3 is a diagram illustrating an example of hardware of the server. The server 100 includes a CPU 101, a RAM 102, an HDD 103, an image signal processing unit 104, an input signal processing unit 105, a medium reader 106, and a network interface card (NIC) 107. Note that the CPU 101 is an example of the processing unit 12 according to the first embodiment. The RAM 102 or the HDD 103 is an example of the storage unit 11 according to the first embodiment.

The CPU 101 is a processor that executes a program command. The CPU 101 loads at least a part of a program and data stored in the HDD 103 into the RAM 102, and executes the program. Note that the CPU 101 may include a plurality of processor cores. Furthermore, the server 100 may include a plurality of processors. Processing described below may be executed in parallel by using a plurality of processors or processor cores. Furthermore, a set of a plurality of processors may be referred to as "multiprocessor" or simply "processor".

The RAM 102 is a volatile semiconductor memory that temporarily stores a program executed by the CPU 101 and data used by the CPU 101 for arithmetic operations. Note that the server 100 may include any type of memory other than the RAM, or may include a plurality of memories.

The HDD 103 is a non-volatile storage device that stores a program of software such as an OS, middleware, and application software, and data. Note that the server 100 may include another type of storage device such as a flash memory or a solid state drive (SSD), or may include a plurality of non-volatile storage devices.

The image signal processing unit 104 outputs an image to a display 111 connected to the server 100 according to a command from the CPU 101.

As the display 111, an optional type of display such as a cathode ray tube (CRT) display, a liquid crystal display (LCD), a plasma display, or an organic electroluminescence (OEL) display may be used.

The input signal processing unit 105 acquires an input signal from an input device 112 connected to the server 100, and outputs the input signal to the CPU 101. As the input device 112, a pointing device such as a mouse, a touch panel, a touch pad, or a trackball, a keyboard, a remote controller, a button switch, or the like may be used. Furthermore, a plurality of types of input devices may be connected to the server 100.

The medium reader 106 is a reading device that reads a program and data recorded on a recording medium 113. As the recording medium 113, for example, a magnetic disk, an optical disk, a magneto-optical (MO) disk, or a semiconductor memory may be used. Examples of the magnetic disk include a flexible disk (FD) and an HDD. Examples of the optical disk include a compact disc (CD) and a digital versatile disc (DVD).

The medium reader 106 copies, for example, a program and data read from the recording medium 113 to another recording medium such as the RAM 102 or the HDD 103. The read program is executed by, for example, the CPU 101. Note that the recording medium 113 may be a portable recording medium, and may be used for distribution of the program and data. Furthermore, the recording medium 113 or the HDD 103 may be referred to as a computer-readable recording medium.

The NIC 107 is an interface that is connected to the network 60 and communicates with another computer via the network 60. For example, the NIC 107 is connected to a communication device such as a switch or a router by a cable.

Note that the server 100 may incorporate a camera or may be connected to a camera, or may perform user authentication of the server 100. For example, by being connected to a camera installed in a facility such as a store, the server 100 may perform authentication of a user who has visited the facility or identification of the user.

Furthermore, the clients 200 and 300 are also implemented by hardware similar to that of the server 100.

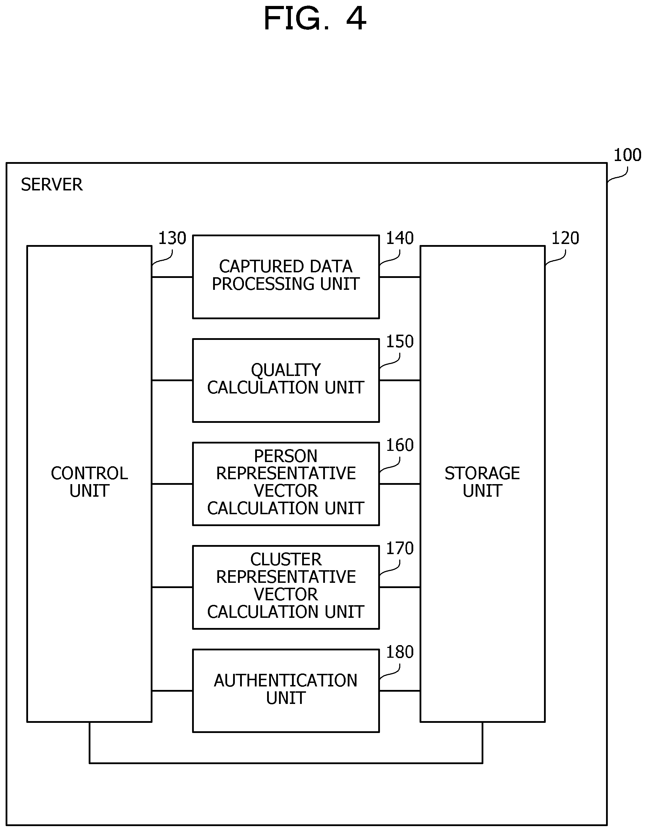

FIG. 4 is a diagram illustrating an example of functions of the server.

The server 100 includes a storage unit 120, a control unit 130, a captured data processing unit 140, a quality calculation unit 150, a person representative vector calculation unit 160, a cluster representative vector calculation unit 170, and an authentication unit 180. A storage area of the RAM 102 or the HDD 103 is used as the storage unit 120.

The control unit 130, the captured data processing unit 140, the quality calculation unit 150, the person representative vector calculation unit 160, the cluster representative vector calculation unit 170, and the authentication unit 180 are implemented by a program.

The storage unit 120 stores a plurality of pieces of captured data acquired in advance for each of a plurality of users. The plurality of pieces of captured data stored in advance in the storage unit 120 may be those generated by the cameras 201 and 301. In that case, the server 100 collects the plurality of pieces of captured data in advance from the clients 200 and 300, and stores the plurality of pieces of captured data in the storage unit 120. Each piece of captured data is associated with a user identifier (ID), which is user identification information.

The storage unit 120 stores a training data table, a person representative data table, and a cluster representative data table.

The training data table is a table in which training data is registered. The training data is used to generate person representative data. The person representative data is information that is generated on the basis of a plurality of pieces of captured data stored in advance in the storage unit 120 and registered in the server 100, prior to authentication of a relevant user.

The training data includes a feature vector and a quality value for each piece of captured data of a user. The feature vector is a vector having a plurality of features as elements. The quality value is an index value indicating quality of the captured data. The quality of the captured data varies in accordance with sensing conditions of the captured data. As elements that affect the quality of the captured data, blur at the time of capturing, a degree of illumination, an inclination of a face with respect to a capturing direction in which a lens of a camera or the like is directed (for example, facing sideways), and the like are conceivable. The larger the quality value, the better or higher the quality of the captured data. The smaller the quality value, the worse or lower the quality of the captured data.

The person representative data table is a table in which the person representative data is registered. The person representative data is one piece of representative data based on a plurality of pieces of training data for each user, which corresponds to the user. The person representative data is a vector having the same number of dimensions as a feature vector of captured data. The person representative data may be referred to as a person representative vector.

The cluster representative data table is a table in which cluster representative data is registered. The cluster representative data is one piece of representative data corresponding to a cluster. The cluster is a group of a plurality of pieces of person representative data. There is a plurality of clusters. One piece of person representative data belongs to one cluster. The cluster representative data is used to narrow down person representative data to be collated at the time of authentication. The cluster representative data is a vector having the same number of dimensions as a feature vector of captured data. The cluster representative data may be referred to as a cluster representative vector.

The control unit 130 controls operations of the captured data processing unit 140, the quality calculation unit 150, the person representative vector calculation unit 160, the cluster representative vector calculation unit 170, and the authentication unit 180.

The captured data processing unit 140 generates, on the basis of captured data stored in the storage unit 120, a feature vector for the captured data. In the feature vector, for example, features in accordance with positions of eyes, nose, mouth, and the like on a face of a relevant user are reflected. To generate the feature vector for a face image, an existing method may be used. The captured data processing unit 140 registers the feature vector generated for the captured data in the training data table stored in the storage unit 120 in association with a user ID.

The quality calculation unit 150 evaluates quality of captured data stored in the storage unit 120, and generates a quality value for the captured data. The quality value is information acquired from the captured data independently of a feature vector. For example, in a case where a face image is targeted, the quality value is magnitude of an inclination of a face with respect to a capturing direction, which is estimated from coordinate data of facial feature points (eyes, nose, mouth, and the like), magnitude of illumination variation between coordinates, magnitude of blur, and the like. The magnitude of the blur indicates magnitude of blur at the time of capturing. It is estimated that the quality value represented by the magnitude of the inclination of the face, the magnitude of the illumination variation, and the magnitude of the blur is correlated with noise mixed in the captured data or the feature vector. It is estimated that the better the quality, in other words, the larger the quality value, the smaller the noise. Furthermore, it is estimated that the worse the quality, in other words, the smaller the quality value, the larger the noise. The quality calculation unit 150 registers the quality value generated for the captured data in the training data table stored in the storage unit 120 in association with a user ID and the feature vector of the captured data.

The person representative vector calculation unit 160 calculates a person representative vector on the basis of training data for each user. The person representative vector calculation unit 160 selects a calculation method of the person representative vector in accordance with the number of pieces of captured data obtained for a relevant user. Here, it is assumed that {S} is an entire set of users for which samples of the captured data are obtained. It is assumed that S is the total number of elements in the set {S}, in other words, the total number of users. A user belonging to the set {S} is represented by s.

First, the person representative vector calculation unit 160 compares the number $N_s$ of pieces of captured data obtained for the relevant user s with a threshold T. It is assumed that the set of users in the case of $N_s \geq T$ is a person subset Su. It is assumed that the set of users in the case of $N_s < T$ is a person subset SI.

For the user s belonging to the person subset Su, the person representative vector calculation unit 160 obtains a person representative vector $Hu^s$ of the user s by Expression (1).

[Expression 1]

$$Hu^s = \frac{1}{N_s} \sum_{n=1}^{N_s} X_n^s \tag{1}$$

$X_n^s$ is a feature vector of an nth piece of the captured data of the user s. The person representative vector $Hu^s$ is an average of feature vectors corresponding to the user s.

For the user s belonging to the person subset SI, the person representative vector calculation unit 160 obtains a person representative vector $Hl^s$ of the user s by Expression (2).

[Expression 2]

$$Hl^s = \frac{1}{\displaystyle\sum_{n=1}^{N_s} W_n^s} \cdot \sum_{n=1}^{N_s} W_n^s X_n^s \tag{2}$$

$W_n^s$ is a weight of the nth piece of the captured data of the user s. The person representative vector $Hl^s$ is a weighted average of the feature vectors corresponding to the user s. $W_n^s$ is represented by, for example, Expression (3).

[Expression 3]

$$W_n^s = \frac{N_s}{T} + \left(1 - \frac{N_s}{T}\right) \cdot \frac{1}{1 + \exp(-Q_n^s)} \tag{3}$$

$Q_n^s$ is a quality value of the nth piece of the captured data of the user s. The quality value is represented by a real number. According to the Expression (3), the smaller the number $N_s$ of pieces of captured data of the user s, the greater an influence of the quality value $Q_n^s$ on the weight $W_n^s$. Furthermore, the larger the quality value $Q_n^s$, the larger the weight $W_n^s$, and the smaller the quality value $Q_n^s$, the smaller the weight $W_n^s$.

Note that, the example is indicated where, in Expression (3), the influence of the quality value $Q_n^s$ on the weight $W_n^s$ is represented by a sigmoid function with the quality value $Q_n^s$ as a variable, but another non-linear function or linear function may be used.

The person representative vector calculation unit 160 registers the person representative vector calculated for each user in the person representative data table stored in the storage unit 120 in association with a user ID.

The cluster representative vector calculation unit 170 classifies a plurality of person representative vectors registered in the person representative data table into a plurality of clusters, and obtains a cluster representative vector of each cluster. For example, K-means clustering may be used as a method of classifying the plurality of person representative vectors into the plurality of clusters and obtaining the cluster representative vector of each cluster. For example, the cluster representative vector calculation unit 170 divides the plurality of person representative vectors into the plurality of clusters by the K-means clustering as follows.

The cluster representative vector calculation unit 170 randomly divides a plurality of person representative vectors into a predetermined number of clusters, and obtains the center of gravity of each cluster. The center of gravity of the cluster is an average value of coordinates of a feature space indicated by the respective person representative vectors belonging to the cl uster.

Then, the cluster representative vector calculation unit 170 reassigns each person representative vector to the center of gravity at the shortest distance from the person representative vector, and recalculates the center of gravity of each cluster. The cluster representative vector calculation unit 170 repeatedly executes this processing to correct the center of gravity of each cluster. For example, the cluster representative vector calculation unit 170 determines the center of gravity of each cluster in a case where there is no change in assignments of the person representative vectors to the clusters or in a case where the number of person representative vectors whose assignments are changed is equal to or less than a predetermined number. Person representative vectors assigned to each cluster at the time of determination are person representative vectors classified into the cluster. Furthermore, the center of gravity of each cluster is a cluster representative vector.

Note that the cluster representative vector calculation unit 170 may classify the plurality of person representative vectors into the plurality of clusters by, for example, another clustering method such as a Gaussian mixture model (GMM).

The cluster representative vector calculation unit 170 registers the calculated cluster representative vectors and user IDs corresponding to the person representative vectors classified into the cluster represented by the cluster representative vector in the cluster representative data table stored in the storage unit 120.

The authentication unit 180 performs face authentication on the basis of an authentication request received from the clients 200 and 300. The authentication request includes captured data obtained by capturing an image of a face of a user to be authenticated. The authentication unit 180 acquires a feature vector for the captured data from the captured data processing unit 140, and collates the acquired feature vector with a cluster representative vector in the cluster representative data table stored in the storage unit 120. For example, the authentication unit 180 collates the feature vector with the cluster representative vector on the basis of a degree of similarity between the feature vector and the cluster representative vector. For the degree of similarity, for example, a distance between a point corresponding to the feature vector in a feature space and a point corresponding to the cluster representative vector is used. In other words, the authentication unit 180 specifies a cluster representative vector having the closest distance to the feature vector among cluster representative vectors registered in the cluster representative data table. The authentication unit 180 may specify a predetermined number that is equal to or greater than two of cluster representative vectors by giving priority to those having a distance close to the feature vector. By the collation with the cluster representative vector, a person representative vector to be collated may be narrowed down.

The authentication unit 180 acquires a person representative vector of a user ID classified into the specified cluster representative vector from the person representative data table, and collates the person representative vector with the feature vector. For example, the authentication unit 180 collates the feature vector with the person representative vector on the basis of a degree of similarity between the feature vector and the person representative vector. For the degree of similarity, for example, a distance between the point corresponding to the feature vector in the feature space and a point corresponding to the person representative vector is used. In other words, the authentication unit 180 determines whether or not there is a person representative vector having a distance from the feature vector equal to or less than a predetermined value. In a case where there is a person representative vector having a distance from the feature vector equal to or less than the predetermined value, the authentication unit 180 determines that a user who operates the client 200 is a user corresponding to the person representative vector, and assumes that the authentication is successful. Then, the authentication unit 180 responds to the client 200 that the authentication is successful. On the other hand, in a case where there is no person representative vector having a distance from the relevant feature vector equal to or less than the predetermined value, the authentication unit 180 determines that the user who operates the client 200 is not a registered user, and assumes that authentication fails. The authentication unit 180 responds to the client 200 that the authentication fails.

The authentication unit 180 performs authentication processing similar to that described above also for an authentication request received from the client 300.

Note that the functions of the captured data processing unit 140 and the quality calculation unit 150 may be provided in the clients 200 and 300. In that case, the server 100 may collect each record of a training data table 121 from the clients 200 and 300. Furthermore, the server 100 may acquire feature vectors for captured data of users to be authenticated from the clients 200 and 300 together with the authentication requests.

Next, an example of data stored in the storage unit 120 will be described.

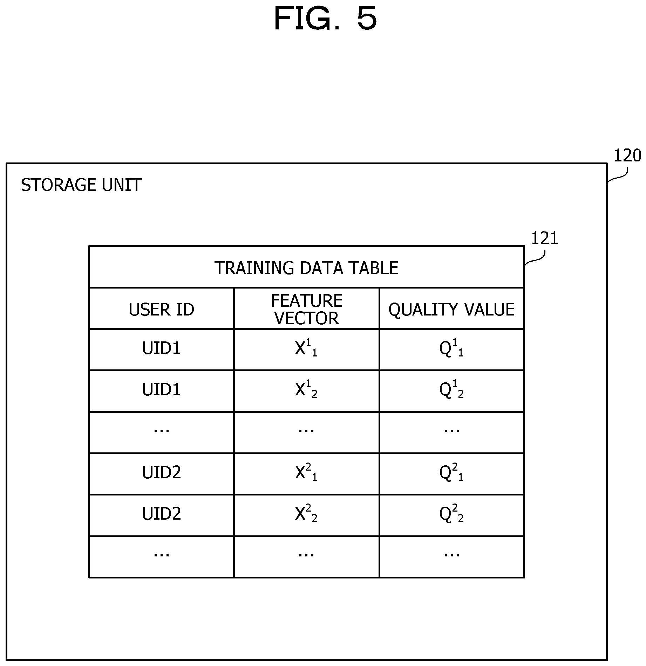

FIG. 5 is a diagram illustrating an example of the training data table.

The training data table 121 includes items of a user ID, a feature vector, and a quality value. In the item of the user ID, a user ID is registered. In the item of the feature vector, a feature vector of captured data is registered.

For example, a record having a user ID "UID1", a feature vector "$X^1_1$", and a quality value "$Q^1_1$" is registered in the training data table 121. This record indicates that the feature vector is "$X^1_1$" and the quality value is "$Q^1_1$" for the first piece of captured data of a user with the user ID "UID1".

In the training data table 121, a record having a feature vector and a quality value for another piece of captured data for the user with the user ID "UID1" is also registered.

In the training data table 121, a record having a feature vector and a quality value for each piece of captured data is registered for another user in a similar manner.

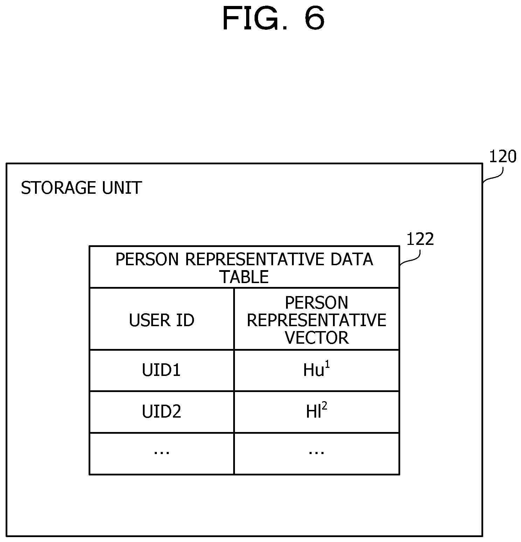

FIG. 6 is a diagram illustrating an example of the person representative data table.

A person representative data table 122 includes items of a user ID and a person representative vector. In the item of the user ID, a user ID is registered. In the item of the person representative vector, a person representative vector is registered.

For example, a record having a user ID "UID1" and a person representative vector "Hu$^1$" is registered in the person representative data table 122. This record indicates that the person representative vector of a user with the user ID "UID1" is "Hu$^1$".

Furthermore, a record having a user ID "UID2" and a person representative vector "HI$^2$" is registered in the person representative data table 122. This record indicates that the person representative vector of a user with the user ID "UID2" is "HI$^2$".

In the person representative data table 122, a person representative vector is registered for another user in a similar manner.

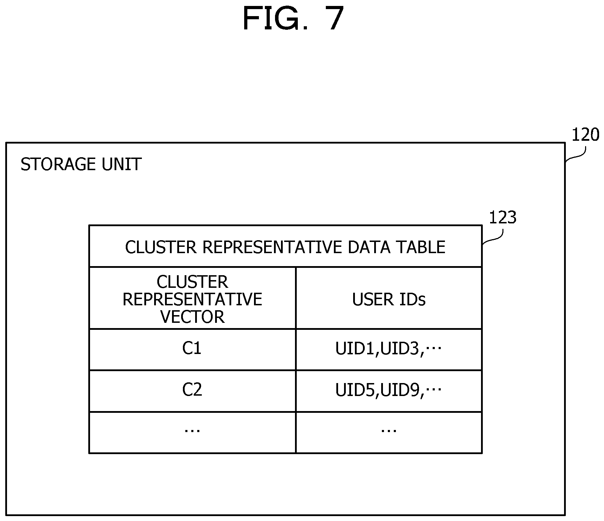

FIG. 7 is a diagram illustrating an example of the cluster representative data table.

A cluster representative data table 123 includes items of a cluster representative vector and user IDs. In the item of the cluster representative vector, a cluster representative vector is registered. In the item of the user IDs, user IDs of person representative vectors classified into a cluster corresponding to the relevant cluster representative vector are registered.

For example, a record having a cluster representative vector "C1" and user IDs "UID1, UID3, ..." is registered in the cluster representative data table 123. This record indicates that the user IDs classified into a cluster of the cluster representative vector "C1" are "UID1, UID3, ...".

In the cluster representative data table 123, a set of user IDs classified into the cluster representative vector is registered for another cluster representative vector in a similar manner.

Next, a processing procedure of the server 100 will be described. First, a procedure for generating a person representative vector and a procedure for generating a cluster representative vector by the server 100 are exemplified.

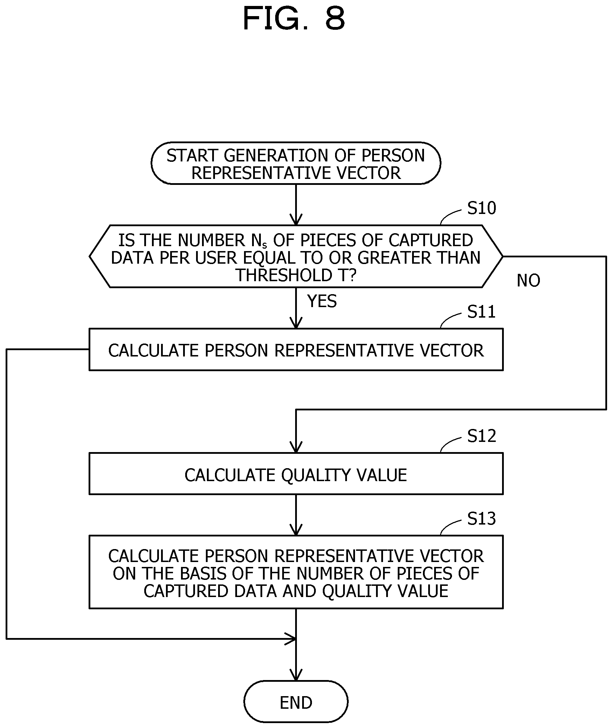

FIG. 8 is a flowchart illustrating an example of the generation of a person representative vector.

The person representative vector calculation unit 160 executes the following procedure for each user.

(S10) The person representative vector calculation unit 160 determines, for the user s, whether or not the number $N_s$ of pieces of captured data per user is equal to or greater than the threshold T, in other words, $N_s \geq T$ holds. In the case of $N_s \geq T$, the person representative vector calculation unit 160 advances the processing to Step S11. In the case of $N_s < T$, the person representative vector calculation unit 160 advances the processing to Step S12.

(S11) The person representative vector calculation unit 160 acquires, from the training data table 121, a feature vector set $\{X^s_n\}$ generated for the captured data of the user s by the captured data processing unit 140. Then, the person representative vector calculation unit 160 calculates a person representative vector Hu$^s$ for the user s on the basis of Expression (1). Note that the feature vectors for the captured data of the user s may be registered in advance in the training data table 121. The person representative vector calculation unit 160 registers the person representative vector Hu$^s$ in the person representative data table 122 in association with a user ID of the user s. Then, the person representative vector calculation unit 160 ends generation of the person representative vector for the user s.

(S12) The quality calculation unit 150 calculates a quality value for each piece of captured data of the user s. As described above, the quality value is magnitude of an inclination of a face with respect to a capturing direction, which is estimated from coordinate data of facial feature points (eyes, nose, mouth, and the like), magnitude of illumination variation between coordinates, magnitude of blur, and the like, and is calculated by an existing method. The quality value may be a value obtained by a predetermined function from a combination of two or more index values such as the magnitude of the inclination of the face, the magnitude of the illumination variation, and the magnitude of the blur. The quality calculation unit 150 registers the calculated quality value in the training data table 121. Note that the quality calculation unit 150 may generate the quality value for each piece of the captured data in advance and register the quality value in the training data table 121. In that case, the person representative vector calculation unit 160 may skip Step S12 and execute Step S13.

(S13) The person representative vector calculation unit 160 acquires, from the training data table 121, the feature vector set $\{X^s_n\}$ generated for the captured data of the user s by the captured data processing unit 140. The person representative vector calculation unit 160 acquires, from the training data table 121, a quality value set $\{Q^s_n\}$ generated for the captured data of the user s by the quality calculation unit 150. The person representative vector calculation unit 160 calculates a weight set $\{W^s_n\}$ on the basis of the Expression (3). Then, the person representative vector calculation unit 160 calculates the person representative vector HI$^s$ for the user s on the basis of Expression (2). Note that the feature vectors for the captured data of the user s may be registered in advance in the training data table 121. The person representative vector calculation unit 160 registers the person representative vector HI$^s$ in the person representative data table 122 in association with the user ID of the user s. Then, the person representative vector calculation unit 160 ends generation of the person representative vector for the user s.

When the server 100 executes the generation of a person representative vector for all users to be registered, the server 100 executes generation of a cluster representative vector as follows.

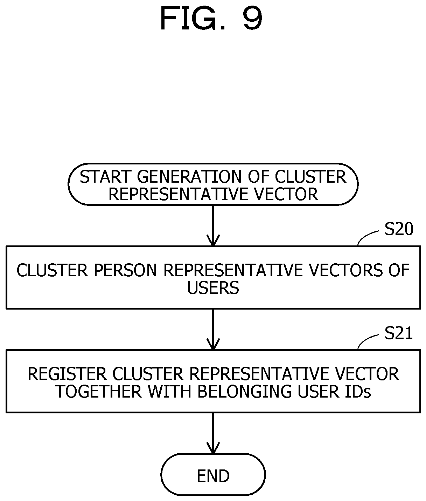

FIG. 9 is a flowchart illustrating an example of the generation of a cluster representative vector.

(S20) The cluster representative vector calculation unit 170 clusters person representative vectors of users.

For the clustering, a method such as the K-means clustering or the GMM described above may be used. By the clustering, the cluster representative vector calculation unit 170 calculates a cluster representative vector of each cluster, and classifies a person representative vector of each user into each cluster.

(S21) The cluster representative vector calculation unit 170 registers the cluster representative vector together with belonging user IDs in the cluster representative data table 123. Then, the cluster representative vector calculation unit 170 ends the generation of the cluster representative vector.

Next, a procedure of user authentication by the server 100 will be exemplified. Hereinafter, the client 200 will be exemplified, but the procedure is similar for the client 300.

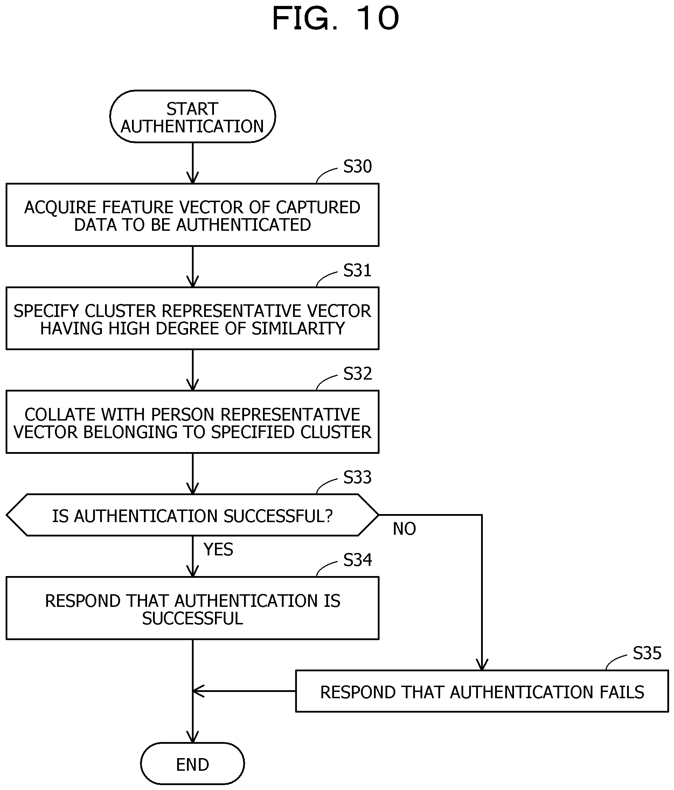

FIG. 10 is a flowchart illustrating an example of the authentication.

The following procedure is executed when the server 100 receives an authentication request from the client 200.

(S30) The authentication unit 180 acquires, from the captured data processing unit 140, a feature vector acquired from captured data included in the authentication request received from the client 200. Note that the authentication request received from the client 200 may include a feature vector corresponding to captured data captured by the camera 201 of the client 200. In this case, it is sufficient that the authentication unit 180 acquires the feature vector included in the authentication request.

(S31) The authentication unit 180 specifies a cluster representative vector having a high degree of similarity to the feature vector acquired in Step S30 among cluster representative vectors registered in the cluster representative data table 123. For example, the authentication unit 180 may specify a cluster representative vector having a closest distance to the feature vector, or may specify a predetermined number of cluster representative vectors by giving priority to those having the close distance.

(S32) The authentication unit 180 collates a person representative vector belonging to a specified cluster with the feature vector acquired in Step S30. For example, the authentication unit 180 specifies a user ID corresponding to the cluster representative vector specified in Step S31 from the cluster representative data table 123. Then, the authentication unit 180 extracts a person representative vector corresponding to the user ID from the person representative data table 122, and collates the person representative vector with the feature vector.

(S33) The authentication unit 180 determines whether or not the authentication is successful on the basis of a result of the collation in Step S32. In a case where the authentication is successful, the authentication unit 180 advances the processing to Step S34. In a case where the authentication fails, the authentication unit 180 advances the processing to Step S35. For example, as a result of the collation in Step S32, in a case where there is a person representative vector having a degree of similarity with the feature vector, in other words, a distance to the feature vector is equal to or less than a predetermined value, the authentication unit 180 determines that the authentication is successful. On the other hand, as a result of the collation in Step S32, in a case where there is no person representative vector having a distance to the feature vector is equal to or less than the predetermined value, the authentication unit 180 determines that the authentication fails.

(S34) The authentication unit 180 responds to the client 200 that the authentication is successful. The authentication unit 180 may transmit the user ID of a user who has succeeded in the authentication and information regarding the user to the client 200 or another computer. The authentication unit 180 may record the user ID of the user who has succeeded in the authentication in a log or the like. Then, the authentication unit 180 ends the authentication processing.

(S35) The authentication unit 180 responds to the client 200 that the authentication fails. The authentication unit 180 may record that the authentication has failed in a log or the like. Then, the authentication unit 180 ends the authentication processing.

Note that the authentication unit 180 may perform the authentication by using a person representative vector calculated by the person representative vector calculation unit 160 from a plurality of pieces of captured data acquired for the user to be authenticated. Also in this case, the person representative vector calculation unit 160 may calculate a person representative vector for the user to be authenticated by using Expression (1), (2), or (3).

Here, in a biometric authentication system having large-scale registration data, by classifying person representative data based on information acquired by a sensor such as a camera according to a degree of similarity, in other words, by performing clustering, person representative data to be collated may be narrowed down, and the person representative data may be searched for at high speed. In the clustering of the person representative data, it is important to construct, in the future, a classifier in which feature data and person representative data obtained from captured data of the same person belong to the same cluster.

In the construction of the classifier, representative points of clusters are obtained on the basis of given training data. When clustering the person representative data, the person representative data is classified into a cluster in which a representative point having the best degree of similarity with the person representative data exists. In an actual operating environment, noise corresponding to fluctuations is added to captured data that is the basis of the person representative data depending on sensing conditions by a sensor such as a camera. Thus, different pieces of data obtained from the same user at different timings (registered data for the user and collation data to be collated with the registered data) are classified into different clusters due to an influence of the noise at each timing, and accuracy at the time of search deteriorates.

The noise mixed in the captured data acts on a feature and perturbs an ideal feature in a case where the noise is not mixed. In the case of constructing a clustering model, training data including samples of a plurality of pieces of captured data of each of a plurality of users is used in order to consider an influence of the noise mixed in the captured data. In other words, by using captured data including an influence of various types of noise, a statistical property of the influence of the noise is modeled. At this time, in general, the larger the number of users and the number of samples for each user, in other words, the larger the number of pieces of captured data, for example, the more the influence of the noise in each sample is canceled by averaging, and accuracy of the clustering model is improved.

However, when focusing on the samples of each user in the training data, a user including only samples including a specific type of noise is modeled in a state where biometric data of the user is strongly affected by the noise. Such a problem is likely to occur in a person with a small number of samples. Although it is also conceivable to exclude such a user from the training data, it is preferable to maintain the number of samples as much as possible because an amount of the training data affects accuracy of the model as described above.

The server 100 according to the second embodiment first calculates, by using samples of a plurality of pieces of captured data of each user included in the training data, a person representative vector representing the user from statistical properties of the samples. The server 100 performs clustering according to a degree of similarity between the users by constructing a cluster on the basis of similarity of the person representative vector. At this time, a user with a relatively small number of samples is likely to be affected by noise of a feature, and it is highly possible that the person representative vector deviates from a true value. On the other hand, in biometric authentication, it may be possible to acquire a quality value of captured data itself from the captured data independently of the feature. For example, in a case where a face image is targeted as the captured data, index values indicating magnitude of an inclination of a face estimated from coordinate data of facial feature points (eyes, nose, mouth, and the like), magnitude of illumination variation, magnitude of blur, and the like are conceivable as the quality values. These quality values are expected to correlate with the noise included in the features.

Thus, the server 100 considers that the feature having a good quality value is less affected by the noise, and calculates the person representative vector so as to approach the feature. With this configuration, a clustering model utilizing an amount of data may be constructed while reducing the influence of the noise.

Since accuracy of the person representative vector is improved, accuracy of a cluster representative vector obtained on the basis of the person representative vector is improved. As a result, it is possible to reduce possibility that different pieces pf biometric data obtained from the same user will be classified into different clusters. Therefore, at the time of authentication, it becomes possible to properly perform narrowing down by a cluster of registered data to be collated with collation data, and authentication accuracy is improved.

Note that, in the example described above, it is assumed that the weight $W^s_n$ using the quality value $Q^s_n$ is obtained in accordance with a ratio ($N_s/T$) of the number $N_s$ of pieces of captured data acquired for the user s to the threshold T. On the other hand, another example is also conceivable for the weight calculation method based on quality of each piece of captured data and the number of pieces of captured data. For example, it is also conceivable to obtain the weight $W^s_n$ by a ratio ($m/N_s$) of the number m of pieces of low-quality captured data having the quality value $Q^s_n$ lower than a predetermined threshold to the number $N_s$ of pieces of captured data. In that case, it is sufficient that ($N_s/T$) in Expression (3) is replaced with ($1 - (m/N_s)$) in Step S13, for example.

[Third Embodiment]

Next, a third embodiment will be described. Matters different from the second embodiment described above will be mainly described, and description of common matters will be omitted.

A server 100 of the third embodiment has hardware and functions similar to those of the server 100 of the second embodiment. Note that, in the third embodiment, a procedure for generating a person representative vector by a person representative vector calculation unit 160 of the server 100 is different from that in the second embodiment.

Here, in the second embodiment, the quality value $Q^s_n$ is represented by, for example, a vector (referred to as a quality vector) including, as elements, a plurality of index values such as magnitude of an inclination of a face relative to a capturing direction, magnitude of illumination variation between coordinates, and magnitude of blur.

Similarly to the second embodiment, a feature vector $X^s_n$ is a feature vector of an nth piece of captured data of an sth user (referred to as user s). s is an integer of $1 \leq s \leq S$. n is an integer of $1 \leq n \leq Ns$. Furthermore, a quality vector $Q^s_n$ is a quality vector of the nth piece of captured data of the user s. It is assumed that the feature vector $X^s_n$ and the quality vector $Q^s_n$ are a $d_x$ dimension and a $d_q$ dimension, respectively. $d_x = d_q$ may hold or $d_x \neq d_q$ may hold.

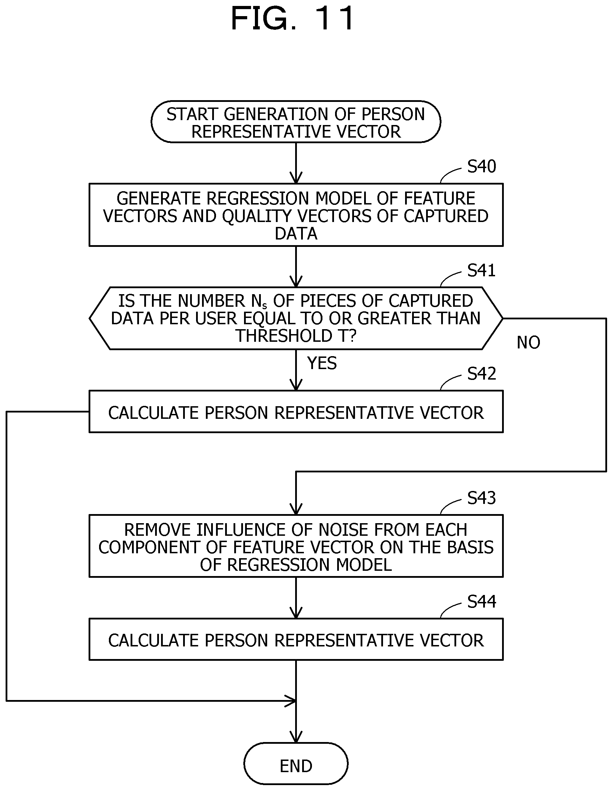

FIG. 11 is a flowchart illustrating an example of generation of a person representative vector according to the third embodiment.

(S40) The person representative vector calculation unit 160 generates a regression model of feature vectors and quality vectors of all pieces of captured data of all users obtained as samples. Specifically, the person representative vector calculation unit 160 obtains a conversion expression $F(X^s_n)$ of Expression (4) for all pairs of the feature vector and the quality vector.

[Expression 4]

$$Q^s_n = F(X^s_n) \tag{4}$$

Conversion by the conversion expression $F(X^s_n)$ may be, for example, a linear conversion as in Expression (5). Expression (5) is also referred to as a regression expression.

[Expression 5]

$$Q^s_n = AX^s_n + B \tag{5}$$

Each of conversion coefficients A and B is a matrix or a vector. The person representative vector calculation unit 160 determines the conversion coefficients A and B so as to minimize a total e of conversion errors in Expression (6) obtained from all the pairs of the feature vector and the quality vector.

[Expression 6]

$$e = \sum_{s=1}^{S} \sum_{n=1}^{N_s} \| AX^s_n + B - Q^s_n \|^2 \tag{6}$$

Here, $\|\cdot\|^2$ represents a norm of a vector. Furthermore, $N_s$ is the number of pieces of captured data acquired for the user s.

(S41) The person representative vector calculation unit 160 determines, for the user s, whether or not the number $N_s$ of pieces of captured data per user is equal to or greater than a threshold T, in other words, $N_s \geq T$ holds. In the case of $N_s \geq T$, the person representative vector calculation unit 160 advances the processing to Step S42. In the case of $N_s < T$, the person representative vector calculation unit 160 advances the processing to Step S43.

(S42) The person representative vector calculation unit 160 acquires a feature vector set $\{X^s_n\}$ of the captured data of the user s from a training data table 121. Then, the person representative vector calculation unit 160 calculates a person representative vector $Hu^s$ for the user s on the basis of Expression (1). The person representative vector calculation unit 160 registers the person representative vector $Hu^s$ in a person representative data table 122 in association with a user ID of the user s. Then, the person representative vector calculation unit 160 ends generation of the person representative vector for the user s.

(S43) The person representative vector calculation unit 160 acquires the feature vector set $\{X^s_n\}$ of the captured data of the user s from the training data table 121. Then, the person representative vector calculation unit 160 removes an influence of noise from each component of the feature vector of each piece of the captured data of the user s on the basis of the regression model. In other words, the person representative vector calculation unit 160 generates a vector $(X')^s_n$ after removing the influence of the noise by Expression (7).

[Expression 7]

$$(X')^s_n = X^s_n - F^{-1}(Q^s_n) \tag{7}$$

Here, a function $F^{-1}$ is an inverse function of a function F.

It may be said that each element of the vector $(X')^s_n$ represents a weight of each element of a feature vector $X^s_n$. In other words, each element of the vector $(X')^s_n$ is an example of the weight of the first embodiment. Alternatively, it may also be said that each element of the vector $(X')^s_n$ represents a weighted feature that reflects the weight of each element of the feature vector $X^s_n$.

(S44) The person representative vector calculation unit 160 calculates a person representative vector $HI^s$ for the user s on the basis of Expression (8).

[Expression 8]

$$HI^s = \frac{1}{N_s} \sum_{n=1}^{N_s} (X')^s_n \qquad (8)$$

The person representative vector $HI^s$ represented by Expression (8) is an average of the vectors $(X')^s_n$. In other words, one component of the person representative vector $HI^s$ is an average of corresponding components of the vectors $(X')^s_n$. The person representative vector calculation unit 160 registers the person representative vector $HI^s$ in the person representative data table 122 in association with the user ID of the user s. Then, the person representative vector calculation unit 160 ends generation of the person representative vector for the user s.

Note that, in a case where person representative vectors are generated for a plurality of users, the person representative vector calculation unit 160 repeatedly executes Steps S41 to S44 for each user.

In the third embodiment as well, the generation of a cluster representative vector and user authentication are performed by the server 100 as in the second embodiment.

In the third embodiment, the influence of the noise on each element of the feature vector of the captured data is reflected in the conversion coefficients A and B in Expression (5). Therefore, a noise component indicating the influence of the noise is estimated in accordance with a quality value as indicated by $F^{-1}(Q^s_n)$ in the second term on the right side of Expression (7). For a feature having a small influence of noise, the server 100 increases an influence of the feature on the person representative vector. Furthermore, for a feature having a large influence of noise, the server 100 decreases an influence of the feature on the person representative vector. With this configuration, a clustering model utilizing an amount of data may be constructed while reducing the influence of the noise.

In the third embodiment as well, since accuracy of the person representative vector is improved, accuracy of the cluster representative vector obtained on the basis of the person representative vector is improved, as in the second embodiment. As a result, it is possible to reduce possibility that different pieces pf biometric data obtained from the same user will be classified into different clusters. Therefore, at the time of authentication, it becomes possible to properly perform narrowing down by a cluster of registered data to be collated with collation data, and authentication accuracy is improved.

Summarizing the second and third embodiments, the server 100 has the following functions, for example.

The person representative vector calculation unit 160 applies, when person representative data representing a plurality of pieces of captured data is calculated from the plurality of pieces of captured data, an algorithm in which the smaller a weight indicated by generated weight information, the smaller an influence of each of the plurality of pieces of captured data on a calculation result of the person representative data. The algorithm is represented by, for example, Expression (2) and Expression (8). In other words, arithmetic operations of Expression (2) and Expression (8) are examples of the "algorithm in which the smaller a weight indicated by generated weight information, the smaller an influence of each of the plurality of pieces of captured data on a calculation result of the person representative data". With this configuration, it is possible to properly adjust, in accordance with the number and quality of the pieces of the captured data, how much information regarding biological features of a person included in each piece of captured data is reflected in the person representative data.

The person representative vector calculation unit 160 increases an influence of quality of each of the plurality of pieces of captured data on a weight of each of the plurality of pieces of captured data as the number of a plurality of pieces of captured data is smaller. With this configuration, it is possible to increase an influence of high-quality captured data on the person representative data and to decrease an influence of low-quality captured data on the person representative data, and it is possible to properly reflect biological features of a person (user) in the person representative data.

Furthermore, in generation of the weight information, the person representative vector calculation unit 160 calculates the weight on the basis of a ratio of the number of the plurality of pieces of captured data to a threshold. For example, the person representative vector calculation unit 160 increases the influence of the quality of each of the plurality of pieces of captured data on the weight of each of the plurality of pieces of captured data as the ratio is small. With this configuration, it is possible to increase an influence of high-quality captured data on the person representative data and to decrease an influence of low-quality captured data on the person representative data, and it is possible to properly reflect biological features of a person (user) in the person representative data.

Alternatively, the person representative vector calculation unit 160 calculates the weight on the basis of a ratio of the number of pieces of captured data of lower quality than predetermined quality to the number of the plurality of pieces of captured data. For example, the person representative vector calculation unit 160 increases the influence of the quality of each of the plurality of pieces of captured data on the weight of each of the plurality of pieces of captured data as the ratio is larger. With this configuration, it is possible to increase an influence of high-quality captured data on the person representative data and to decrease an influence of low-quality captured data on the person representative data, and it is possible to properly reflect biological features of a person (user) in the person representative data.

Furthermore, the person representative vector calculation unit increases the weight of the captured data as the quality of the captured data is higher. With this configuration, it is possible to reduce an influence of noise on the person representative data, and properly reflect biological features of a person (user) in the person representative data.

Alternatively, the person representative vector calculation unit 160 generates a regression model of a feature vector of each of the plurality of pieces of captured data and a quality vector indicating the quality of each of the plurality of pieces of captured data, and estimates a noise component included in each element of the feature vector on the basis of the regression model. With this configuration, it becomes possible to directly remove the noise component from each element of the feature vector. Note that the captured data used to generate the regression model may be obtained for a plurality of persons. In this case, the regression model is generated for the plurality of persons. Note that the regression model may be generated for each person.

By subtracting the estimated noise component from a first element of a feature vector corresponding to the noise component, the person representative vector calculation unit 160 calculates a weight of the first element of the feature vector of each of the plurality of pieces of captured data with respect to a second element of the person representative data corresponding to the first element. Here, when it is assumed that the feature vector and the person representative data (person representative vector) are column vectors, the first element and the second element are elements in the same row of the feature vector and the person representative data. The second element of the person representative data is an average of the first elements corresponding to the second element of the plurality of feature vectors of the plurality of pieces of captured data. Then, the smaller the weight of the person representative data for each element, the smaller an influence of the corresponding element of the feature vector of each of the plurality of pieces of captured data on a calculation result of the person representative data. Thus, it is possible to properly reflect biological features of a person (user) in the person representative data.

Moreover, the cluster representative vector calculation unit 170 calculates, on the basis of a plurality of pieces of the person representative data calculated for a plurality of persons, a plurality of pieces of cluster representative data corresponding to a plurality of clusters into which the plurality of pieces of representative data is classified. As described above, in the person representative data of each person, biological features of each person are properly reflected. Thus, for example, it is possible to perform highly accurate clustering by the K-means clustering, the GMM, or the like on the basis of a degree of similarity of each piece of the person representative data.

Furthermore, the authentication unit 180 receives captured data of a person at the time of authentication of the person, and preferentially selects cluster representative data having a high degree of similarity to feature data of the captured data from the plurality of pieces of cluster representative data. The authentication unit 180 collates person representative data classified into a cluster corresponding to the selected cluster representative data with the feature data on the basis of the degree of similarity. Since each piece of person representative data is clustered with high accuracy, accuracy of narrowing down the person representative data at the time of authentication by the cluster is improved. Therefore, authentication accuracy may be improved.

Here, each piece of the feature data, the person representative data, and the cluster representative data is a vector in the same feature space. Furthermore, the degree of similarity is a distance between two points indicated by two vectors in the feature space. With this configuration, collation at the time of authentication may be properly performed.

Furthermore, information regarding the quality is an index value indicating at least one of magnitude of blur in captured data, magnitude of illumination variation, and magnitude of an inclination of a face relative to a capturing direction. As described above, the information regarding the quality may be a quality vector including a plurality of these index values. These index values are suitable for performing face authentication using a face image, and are particularly useful for generating person representative data with high accuracy when person representative data used for face authentication is generated.

Note that the information processing according to the first embodiment may be implemented by causing the processing unit 12 to execute a program. Furthermore, the information processing according to the second and third embodiments may be implemented by causing the CPU 101 to execute a program. The program may be recorded in the computer-readable recording medium 113.

For example, the program may be distributed by distributing the recording medium 113 in which the program is recorded. Furthermore, the program may be stored in another computer and distributed via a network. For example, a computer may store (install) the program, which is recorded in the recording medium 113 or received from another computer, in a storage device such as the RAM 102 or the HDD 103, read the program from the storage device, and execute the program.

The above merely describes the principle of the present invention. Moreover, numerous modifications and variations may be made by those skilled in the art, and the present invention is not limited to the above-described or illustrated exact configuration and application example, and all corresponding modifications and equivalents are regarded to fall within the scope of the present invention by appended claims and equivalents thereof.

REFERENCE SIGNS LIST

| | |
|---|---|
| 10 | Information processing apparatus |
| 11 | Storage unit |
| 12 | Processing unit |
| 20 | Captured data group |
| 21 | Captured data |
| 30 | Quality information group |
| 31 | Quality information |
| 40 | Weight information group |
| 41 | Weight information |
| 50 | Representative data |

**Claims**

1. A control method for causing a computer to execute processing comprising:

   receiving a plurality of pieces of captured data of a person;
   generating, on the basis of quality of each of the plurality of pieces of captured data and the number of the plurality of pieces of captured data, weight information that indicates a weight applied to each of the plurality of pieces of captured data; and
   applying, when representative data that represents the plurality of pieces of captured data is calculated from the plurality of pieces of captured data, an algorithm in which the smaller the weight indicated by the generated weight information, the smaller an influence of each of the plurality of pieces of captured data on a calculation result of the representative data.

2. The control method according to claim 1, wherein
   in the generating the weight information, the smaller the number of the plurality of pieces of captured data, the larger an influence of the quality of each of the plurality of pieces of captured data on the weight of each of the plurality of pieces of captured data.

3. The control method according to claim 1, wherein
   in the generating the weight information, the weight is calculated on the basis of a ratio of the number of the plurality of pieces of captured data to a threshold.

4. The control method according to claim 1, wherein
   in the generating the weight information, the weight is calculated on the basis of a ratio of the number of pieces of captured data of lower quality than predetermined quality to the number of the plurality of pieces of captured data.

5. The control method according to claim 1, wherein
   in the generating the weight information, the higher quality of captured data, the larger the weight of the captured data.

6. The control method according to claim 1, wherein
   in the generating the weight information, a regression model of a feature vector of each of the plurality of pieces of captured data and a quality vector that indicates the quality of each of the plurality of pieces of captured data is generated, and a noise component included in each element of the feature vector is estimated on the basis of the regression model.

7. The control method according to claim 6, wherein
   in the generating the weight information, by subtraction of the estimated noise component from a first element of the feature vector that corresponds to the noise component, the weight of the first element of the feature vector of each of the plurality of pieces of captured data with respect to a second element of the representative data that corresponds to the first element is calculated.

8. The control method according to claim 1, for causing the computer to execute processing further comprising

calculating, on the basis of a plurality of pieces of the representative data calculated for a plurality of persons, a plurality of pieces of cluster representative data that corresponds to a plurality of clusters into which the plurality of pieces of representative data is classified.

9. The control method according to claim 8, for causing the computer to execute processing further comprising receiving captured data of the person at the time of authentication of the person, preferentially selecting cluster representative data that has a high degree of similarity to feature data of the captured data from the plurality of pieces of cluster representative data, and collating the representative data classified into a cluster that corresponds to the selected cluster representative data with the feature data on the basis of the degree of similarity.

10. The control method according to claim 9, wherein

each piece of the feature data, the representative data, and the cluster representative data is a vector in the same feature space, and
the degree of similarity is a distance between two points indicated by two of the vectors in the feature space.

11. The control method according to claim 1, wherein
information regarding the quality is an index value that indicates magnitude of blur in captured data, magnitude of illumination variation or magnitude of an inclination of a face relative to a capturing direction or any combination thereof.

12. A control program for causing a computer to execute processing comprising:

receiving a plurality of pieces of captured data of a person;
generating, on the basis of quality of each of the plurality of pieces of captured data and the number of the plurality of pieces of captured data, weight information that indicates a weight applied to each of the plurality of pieces of captured data; and
applying, when representative data that represents the plurality of pieces of captured data is calculated from the plurality of pieces of captured data, an algorithm in which the smaller the weight indicated by the generated weight information, the smaller an influence of each of the plurality of pieces of captured data on a calculation result of the representative data.

13. An information processing apparatus comprising:

a storage unit that stores a plurality of pieces of captured data of a person; and
an execution unit that:

generates, on the basis of quality of each of the plurality of pieces of captured data and the number of the plurality of pieces of captured data, weight information that indicates a weight applied to each of the plurality of pieces of captured data, and
applies, when representative data that represents the plurality of pieces of captured data is calculated from the plurality of pieces of captured data, an algorithm in which the smaller the weight indicated by the generated weight information, the smaller an influence of each of the plurality of pieces of captured data on a calculation result of the representative data.

# FIG. 1

INFORMATION PROCESSING APPARATUS 10

STORAGE UNIT 11    PROCESSING UNIT 12

20    CAPTURED DATA 21

30    QUALITY INFORMATION 31

40    WEIGHT INFORMATION 41

REPRESENTATIVE DATA 50

# FIG. 2

# FIG. 3

# FIG. 4

# FIG. 5

STORAGE UNIT $\quad\quad\quad$ 120

| TRAINING DATA TABLE | | | 121 |
|---|---|---|
| USER ID | FEATURE VECTOR | QUALITY VALUE |
| UID1 | $X^1_1$ | $Q^1_1$ |
| UID1 | $X^1_2$ | $Q^1_2$ |
| ... | ... | ... |
| UID2 | $X^2_1$ | $Q^2_1$ |
| UID2 | $X^2_2$ | $Q^2_2$ |
| ... | ... | ... |

# FIG. 6

120

STORAGE UNIT

122

| PERSON REPRESENTATIVE DATA TABLE | |
|---|---|
| USER ID | PERSON REPRESENTATIVE VECTOR |
| UID1 | $Hu^1$ |
| UID2 | $HI^2$ |
| ... | ... |

# FIG. 7

STORAGE UNIT                                                    120

| CLUSTER REPRESENTATIVE DATA TABLE | | 123 |
|---|---|
| CLUSTER REPRESENTATIVE VECTOR | USER IDs |
| C1 | UID1,UID3,··· |
| C2 | UID5,UID9,··· |
| ... | ... |

# FIG. 8

```
        ╭──────────────────────────────╮
        │  START GENERATION OF PERSON  │
        │    REPRESENTATIVE VECTOR     │
        ╰──────────────────────────────╯
                      │
                      ▼                              S10
    ╱─────────────────────────────────────────╲
   ╱  IS THE NUMBER Nₛ OF PIECES OF CAPTURED   ╲
  ╱ DATA PER USER EQUAL TO OR GREATER THAN      ╲──────┐
   ╲            THRESHOLD T?                    ╱   NO │
    ╲─────────────────────────────────────────╱       │
                      │ YES                            │
                      ▼              S11               │
    ┌──────────────────────────────────────────┐      │
    │   CALCULATE PERSON REPRESENTATIVE VECTOR  │      │
    └──────────────────────────────────────────┘      │
                      │                                │
                      ▼◄───────────────────────────────┘
                                     S12
    ┌──────────────────────────────────────────┐
    │          CALCULATE QUALITY VALUE          │
    └──────────────────────────────────────────┘
                      │              S13
                      ▼
    ┌──────────────────────────────────────────┐
    │ CALCULATE PERSON REPRESENTATIVE VECTOR    │
    │ ON THE BASIS OF THE NUMBER OF PIECES OF   │
    │ CAPTURED DATA AND QUALITY VALUE           │
    └──────────────────────────────────────────┘
                      │
                      ▼
                ╭──────────╮
                │   END    │
                ╰──────────╯
```

Is the number $N_s$ of pieces of captured data per user equal to or greater than threshold T?

# FIG. 9

```
        ┌─────────────────────────────────┐
        │   START GENERATION OF CLUSTER   │
        │      REPRESENTATIVE VECTOR      │
        └─────────────────────────────────┘
                         │
                         ▼                    ⟋ S20
        ┌─────────────────────────────────┐
        │ CLUSTER PERSON REPRESENTATIVE   │
        │        VECTORS OF USERS         │
        └─────────────────────────────────┘
                         │
                         ▼                    ⟋ S21
        ┌─────────────────────────────────┐
        │ REGISTER CLUSTER REPRESENTATIVE │
        │  VECTOR TOGETHER WITH BELONGING │
        │          USER IDs               │
        └─────────────────────────────────┘
                         │
                         ▼
                  ┌─────────────┐
                  │     END     │
                  └─────────────┘
```

# FIG. 10

```
        ┌─────────────────────┐
        │        START        │
        │   AUTHENTICATION    │
        └──────────┬──────────┘
                   │            ┌─ S30
                   ▼
        ┌─────────────────────────────────┐
        │  ACQUIRE FEATURE VECTOR OF       │
        │  CAPTURED DATA TO BE             │
        │  AUTHENTICATED                   │
        └──────────┬──────────────────────┘
                   │            ┌─ S31
                   ▼
        ┌─────────────────────────────────┐
        │  SPECIFY CLUSTER REPRESENTATIVE  │
        │  VECTOR HAVING HIGH DEGREE OF    │
        │  SIMILARITY                      │
        └──────────┬──────────────────────┘
                   │            ┌─ S32
                   ▼
        ┌─────────────────────────────────┐
        │  COLLATE WITH PERSON             │
        │  REPRESENTATIVE VECTOR           │
        │  BELONGING TO SPECIFIED CLUSTER  │
        └──────────┬──────────────────────┘
                   │            ┌─ S33
                   ▼
        ╱───────────────────────────────╲        NO
        ⟨   IS AUTHENTICATION SUCCESSFUL?  ⟩───────────┐
        ╲───────────────────────────────╱             │
                   │ YES                               │
                   │            ┌─ S34                 │
                   ▼                                   │
        ┌─────────────────────────────────┐           │
        │  RESPOND THAT AUTHENTICATION IS  │           │
        │  SUCCESSFUL                      │           │
        └──────────┬──────────────────────┘           │
                   │                         ┌─ S35    ▼
                   │        ┌──────────────────────────────────────┐
                   │◄───────│  RESPOND THAT AUTHENTICATION FAILS    │
                   │        └──────────────────────────────────────┘
                   ▼
              ┌─────────┐
              │   END   │
              └─────────┘
```

# FIG. 11

START GENERATION OF PERSON
REPRESENTATIVE VECTOR

S40

GENERATE REGRESSION MODEL OF FEATURE
VECTORS AND QUALITY VECTORS OF CAPTURED
DATA

S41

IS THE NUMBER $N_s$ OF PIECES OF CAPTURED
DATA PER USER EQUAL TO OR GREATER THAN
THRESHOLD T?

NO

YES

S42

CALCULATE PERSON REPRESENTATIVE VECTOR

S43

REMOVE INFLUENCE OF NOISE FROM EACH
COMPONENT OF FEATURE VECTOR ON THE BASIS
OF REGRESSION MODEL

S44

CALCULATE PERSON REPRESENTATIVE VECTOR

END

## INTERNATIONAL SEARCH REPORT

| International application No. |
| --- |
| PCT/JP2020/008809 |

**A. CLASSIFICATION OF SUBJECT MATTER**
Int.Cl. G06T7/00(2017.01)i
FI: G06T7/00510F

According to International Patent Classification (IPC) or to both national classification and IPC

**B. FIELDS SEARCHED**

Minimum documentation searched (classification system followed by classification symbols)
Int.Cl. G06T7/00

Documentation searched other than minimum documentation to the extent that such documents are included in the fields searched
Published examined utility model applications of Japan      1922-1996
Published unexamined utility model applications of Japan    1971-2020
Registered utility model specifications of Japan            1996-2020
Published registered utility model applications of Japan    1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2014/132841 A1 (HITACHI KOKUSAI ELECTRIC INC.) 04.09.2014 (2014-09-04), paragraphs [0011]-[0036] | 1-13 |
| A | JP 2017-91520 A (SAMSUNG ELECTRONICS CO., LTD.) 25.05.2017 (2017-05-25), paragraphs [0042]-[0109] | 1-13 |

☐ Further documents are listed in the continuation of Box C.   ☒ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 28.05.2020 | 09.06.2020 |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**
Information on patent family members

| International application No. |
|---|
| PCT/JP2020/008809 |

```
WO 2014/132841 A1  04.09.2014    US 2016/0012280 A1
                                 paragraphs [0022]-[0064]

JP 2017-91520 A     25.05.2017    US 2017/0132408 A1
                                 paragraphs [0065]-[0130]
                                 EP 3168777 A1
                                 KR 10-2017-0055393 A
                                 CN 106682068 A
```

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016144523 A